# FASCICULE DE BREVET EUROPEEN

(11) **EP 2 984 349 B1**
(45) Date de publication et mention de la délivrance du brevet: **26.05.2021**
(21) Numéro de dépôt: 14720651.0
(22) Date de dépôt: 28.03.2014
(51) Int. Cl.: F04D 29/32, F01D 5/02, F01D 21/04

(54) **DISQUE DE SOUFFLANTE POUR UN TURBORÉACTEUR ET TURBORÉACTEUR**
FAN-ROTORSCHEIBE FÜR EIN TURBOSTRAHLTRIEBWERK SOWIE TURBOSTRAHLTRIEBWERK
FAN DISC FOR A TURBOJET ENGINE AND TURBOJET ENGINE

(30) Priorité: 09.04.2013 FR 1353177
(43) Date de publication de la demande: 17.02.2016
(60) Demande divisionnaire: 16182208.5
(73) Titulaire: Safran Aircraft Engines, 75015 Paris (FR)
(72) Inventeur: BOIS, Stéphane, F-77550 Moissy-Cramayel (FR); ACCARY, Arnaud, F-77550 Moissy-Cramayel (FR); DEJAUNE, Claude, F-77550 Moissy-Cramayel (FR); KIENER-CALVET, Benjamin, F-77550 Moissy-Cramayel (FR); FOLL, Julien, F-77550 Moissy-Cramayel (FR); TAN-KIM, Alexandre, F-77550 Moissy-Cramayel (FR); PETARD, Benjamin, F-77550 Moissy-Cramayel (FR)
(74) Mandataire: Regimbeau
(86) Numéro de dépôt international: PCT/FR2014/050743
(87) Numéro de publication internationale: WO 2014/167209

(56) Documents cités:
- EP-A1- 1 970 537
- EP-A2- 2 594 739
- EP-A2- 2 602 434
- US-A1- 2005 254 952
- US-A1- 2012 275 921

## Description

### DOMAINE DE L'INVENTION

L'invention concerne le domaine des turbomachines, et plus particulièrement le domaine des turboréacteurs comprenant une soufflante solidaire d'un arbre d'entrainement.

### ARRIERE-PLAN TECHNOLOGIQUE

Un turboréacteur 1 comporte typiquement une nacelle qui forme une ouverture pour l'admission d'un flux déterminé d'air vers le moteur proprement dit. Le turboréacteur comprend une ou plusieurs sections de compression de l'air admis dans le moteur (généralement une section basse pression 2 et une section haute pression). L'air ainsi comprimé est admis dans la chambre de combustion et mélangé avec du carburant avant d'y être brûlé. Les gaz de combustion chauds issus de cette combustion sont ensuite détendus dans différents étages de turbine (généralement une section basse pression et une section haute pression).

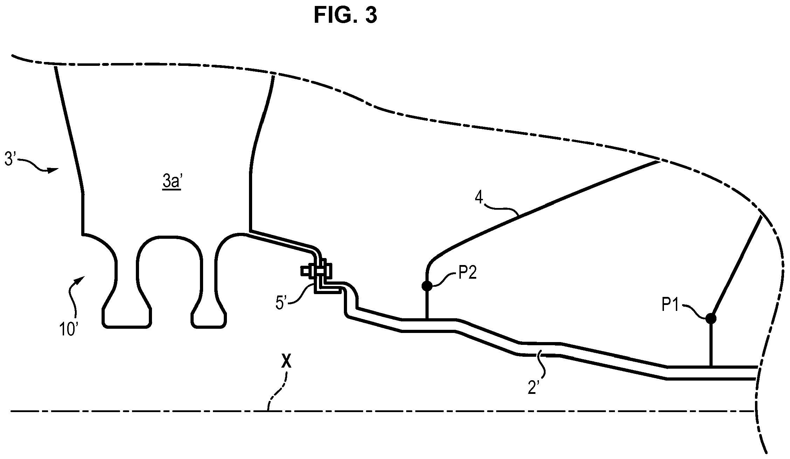

Un exemple de soufflante 3' et de compresseur basse pression 2 conformes à l'art antérieur est illustré sur la figure 3.

La soufflante 3' comporte un disque de soufflante 10' pourvu d'aubes 3a' à sa périphérie qui, lorsqu'elles sont mises en rotation, entraînent l'air dans le turboréacteur. Le disque de soufflante 10' est supporté par un arbre d'entraînement du compresseur basse pression 2' qui est centré sur l'axe du turboréacteur par une série de paliers, supportés par des pièces de support reliées à la structure fixe du turboréacteur.

Le compresseur basse pression 2' quant à lui comporte des aubes fixes solidaires d'un carter de séparation et des aubes mobiles solidaires d'un tambour d'entraînement 4 (connu de l'homme du métier sous sa désignation anglaise « booster ») pour compresser le flux primaire circulant d'amont en aval dans le turboréacteur. Le tambour d'entrainement 4 est par ailleurs fixé en amont au disque de soufflante 10' par l'intermédiaire d'une liaison boulonnée, et est entrainé en rotation par le disque de soufflante 10' autour de l'axe du turboréacteur.

Le disque de soufflante doit par conséquent assurer l'opérabilité du tambour d'entrainement, c'est-à-dire être suffisamment souple afin de garantir le maintien en position du tambour d'entrainement et contrôler son comportement radial pour assurer les jeux en sommet d'aubes, tout en étant suffisamment rigide pour satisfaire au critère de perte d'aube de soufflante (ou « Fan Blade Out » en anglais).

En effet, en fonctionnement, il peut se produire, accidentellement, la rupture d'une aube de soufflante 3a. Il s'ensuit un balourd important sur l'arbre d'entrainement 2 de la soufflante 3, qui génère des charges et des vibrations sur les paliers, transmises par leurs pièces de support à la structure fixe du turboréacteur.

Afin de pouvoir dimensionner la structure du turboréacteur de façon moins lourde et moins coûteuse, l'art antérieur enseigne, comme par exemple dans les brevets FR 2, 831, 624 et FR 2, 752, 024, de prévoir un turboréacteur 1 à découpleur, comprenant un système de découplage d'un ou plusieurs paliers. Ainsi, à l'apparition d'un balourd sur l'arbre d'entraînement, les efforts de balourd sont convertis en efforts longitudinaux par la pièce de support du palier. Cependant, le disque de soufflante étant fixé à l'arbre d'entrainement par l'intermédiaire d'une bride boulonnée 5', les charges qui transitent dans le disque de soufflante et dans l'arbre d'entrainement deviennent alors très importante au niveau de la liaison en cas de découplage. Une telle fixation par boulonnage n'est alors pas suffisamment rigide pour supporter les charges qui résulteraient de la perte d'une aube.

Il a également été proposé de modifier la forme du disque de soufflante. Néanmoins, ces formes sont généralement encombrantes et lourdes et/ou ne permettent pas de respecter les contraintes en souplesse et en rigidité requises pour à la fois assurer l'opérabilité du tambour d'entrainement et résister aux charges.

Le document US 2012/0275921 propose un disque de soufflante conforme au préambule de la revendication 1.

Le document EP 1 970 537 quant à lui, qui est au nom de la Demanderesse, décrit un disque de soufflante présentant une paroi de jonction s'étendant radialement par rapport à un axe du turboréacteur.

### RESUME DE L'INVENTION

Un objectif de l'invention est de proposer un disque de soufflante qui soit suffisamment souple pour assurer l'opérabilité du tambour d'entrainement, tout en étant suffisamment rigide pour supporter les charges résultant de la perte d'une ou plusieurs aubes de soufflante, tout en présentant un encombrement et une masse réduits, même dans le cas d'un turboréacteur comprenant un système de découplage.

Pour cela, l'invention propose un disque de soufflante conforme à la revendication 1.

Cette forme en épingle permet de rendre plus souple la liaison entre le disque de soufflante et la partie amont de la ligne d'arbre et d'améliorer le fonctionnement dynamique de l'ensemble lors d'un incident, tel que la perte d'aube. Cela se traduit, dans ce cas, par une baisse importante des charges dans les structures avales du turboréacteur et par une réduction significative des déplacements radiaux du disque de soufflante.

Le disque de soufflante comprend en outre un renfoncement dans une face amont dans le sens de circulation du gaz, au niveau de la jonction entre la deuxième branche et la paroi de jonction, de sorte que la face amont du disque de soufflante présente une ligne circonférentielle d'inflexion entre le renfoncement et la paroi de jonction.

Certaines caractéristiques préférées mais non limitatives du disque de soufflante sont les suivantes :
- la première branche comprend une virole interne dont une face interne est munie d'une série de cannelures de soufflante, lesdites cannelures de soufflante étant adaptées pour coopérer avec des cannelures d'entrainement associées de l'arbre d'entrainement,
- la virole interne comprend en outre un ensemble de centrage agencé pour coopérer avec un ensemble de centrage associé de l'arbre d'entrainement afin d'améliorer la résistance de la première branche aux charges radiales,
- un bord amont dans le sens de circulation du gaz de la virole interne est décalé axialement par rapport à un bord amont de la deuxième branche et la paroi de jonction s'étend entre le bord amont de la virole interne et le bord amont de la deuxième branche,
- la paroi de jonction présente une section radiale évolutive et inclinée vers l'amont entre la première branche et la deuxième branche,
- la section radiale de la paroi de jonction est courbe dans une zone adjacente à la deuxième branche, la concavité de la courbe étant orientée vers l'aval dans le sens de circulation du gaz,
- le disque de soufflante comprend en outre un ergot de démontage et de maintien s'étendant radialement intérieurement depuis la paroi de jonction, configuré pour coopérer avec un écrou fixé sur l'arbre d'entrainement afin de bloquer axialement le disque de soufflante.

L'invention propose également un turboréacteur comprenant un arbre d'entrainement et un disque de soufflante comme décrit ci-dessus, fixé sur l'arbre d'entrainement par l'intermédiaire de sa première branche et adapté pour recevoir une pluralité d'aubes de soufflante, la deuxième branche du disque de soufflante pouvant comprendre un alésage sensiblement lisse.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

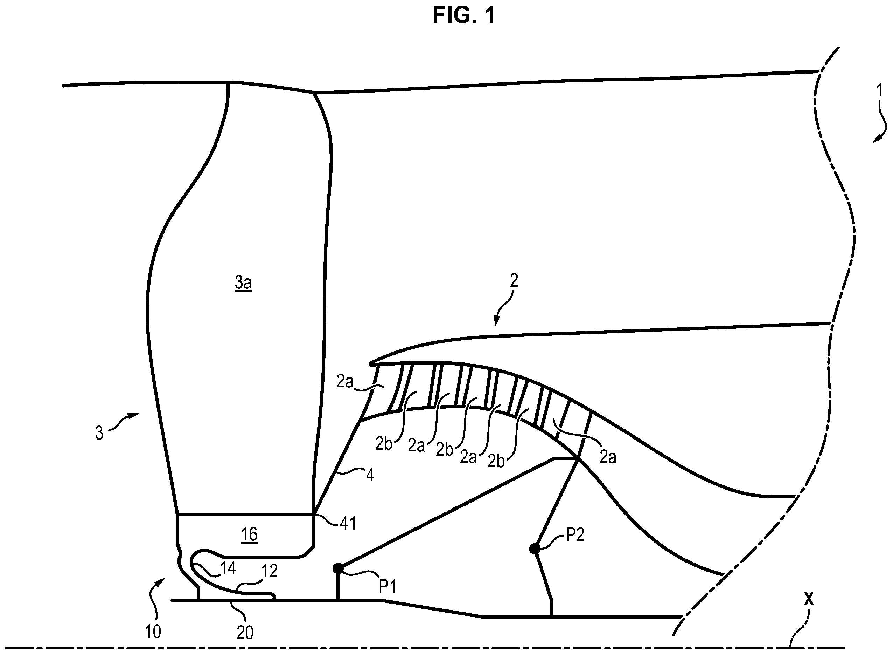

La figure 1 est une vue schématique en coupe partielle d'un exemple de turboréacteur conforme à l'invention,
La figure 2 est une vue schématique en coupe partielle du disque de soufflante de la figure 1, et
La figure 3 est une schématique vue en coupe partielle d'un turboréacteur conforme à l'art antérieur.

### DESCRIPTION DETAILLEE D'UN MODE DE REALISATION

Un turboréacteur 1 comprend, d'amont en aval dans le sens de l'écoulement des gaz, une soufflante 3, un ou plusieurs étages de compresseurs 2, un ou plusieurs étages de turbines et une tuyère d'échappement des gaz.

La soufflante 3 comporte un disque de soufflante 10 pourvu d'aubes 3a à sa périphérie qui, lorsqu'elles sont mises en rotation, entraînent l'air dans le turboréacteur 1. Le disque de soufflante 10 est supporté par l'arbre d'entrainement 20 du compresseur basse pression 2 qui est centré sur l'axe du turboréacteur 1 par une série de paliers P1, P2, supportés par des pièces de support reliées à la structure fixe du turboréacteur 1.

Le compresseur basse pression 2 quant à lui comporte des aubes fixes 2a solidaires d'un carter de séparation et des aubes mobiles 2b solidaires d'un tambour d'entraînement 4 (ou « booster ») pour compresser le flux primaire circulant d'amont en aval dans le turboréacteur 1. Le tambour d'entrainement 4 est par ailleurs fixé au disque de soufflante 10 par l'intermédiaire d'une liaison boulonnée 41 et est entrainé en rotation par le disque de soufflante 10 autour de l'axe du turboréacteur 1.

Le disque de soufflante 10 est de forme globalement annulaire et présente une section radiale en forme d'épingle comprenant :
- une première branche 12, adaptée pour être fixée à l'arbre d'entrainement 20 du turboréacteur 1,
- une deuxième branche 16, s'étendant en regard de la première branche 12 et adaptée pour supporter une pluralité d'aubes de soufflante 3a, et
- une paroi de jonction courbe 14, s'étendant entre la première branche 12 et la deuxième banche 16.

Cette forme en épingle permet de rendre plus souple la liaison entre le disque de soufflante 10 et la partie amont de la ligne d'arbre et d'améliorer le fonctionnement dynamique de l'ensemble lors d'un incident, tel que la perte d'aube. Cela se traduit, dans ce cas, par une baisse importante des charges dans les structures avales du turboréacteur 1 et par une réduction significative des déplacements radiaux du disque de soufflante 10.

La première branche 12 comprend une virole interne 121 centrée sur l'axe du turboréacteur 1, et dont la face interne est adaptée pour être fixée sur une extrémité libre amont 201 de l'arbre d'entrainement 20. Pour cela, la face interne de la virole interne 121 est munie d'une série de cannelures 122 de soufflante s'étendant longitudinalement le long de l'axe du turboréacteur 1, adaptées pour coopérer avec des cannelures 202 d'entrainement associées de l'arbre d'entrainement 20.

Les cannelures (d'entrainement 202 et de soufflante 122) ont pour fonction de transmettre les efforts de l'arbre d'entrainement 20 au reste du disque de soufflante 10, afin de mettre le disque de soufflante 10 en rotation, et d'entrainer les aubes de soufflante 3a ainsi que le tambour d'entrainement 4 (booster). Elles permettent donc de rigidifier la première branche 12 du disque de soufflante 10 pour assurer le passage du couple entre l'arbre d'entrainement 20 et le disque de soufflante 10, et constituent une liaison solide capable de supporter les charges résultant d'une perte d'aube de soufflante 3a. En effet, une telle liaison par cannelures 202, 122 est plus résistante qu'une liaison par boulonnages, de sorte que le disque de soufflante 10 résiste mieux aux charges liées à une éventuelle perte d'aube de soufflante 3a.

Afin d'améliorer la résistance de la première branche 12 aux charges radiales (par rapport à l'axe X), le turboréacteur 1 peut en outre comprendre des organes de centrage de la virole interne 121 par rapport à l'arbre d'entrainement 20, configurés pour maintenir radialement en position la virole 121 sur l'arbre d'entrainement 20. Les organes de centrage peuvent notamment comprendre un ensemble de centrage aval 123, 203 et/ou un ensemble de centrage amont 124, 204. L'ensemble de centrage aval peut comprendre un bossage annulaire 203, s'étendant radialement depuis l'arbre d'entrainement 20 dans une zone adjacente à une extrémité aval des crénelures d'entrainement 202, sur lequel vient en appui un bord aval 123 de la virole interne 121. L'ensemble de centrage amont quant à lui peut comprendre une rainure annulaire 204 centrée sur l'axe X et formée dans l'arbre d'entrainement 20 dans une zone adjacente à une extrémité amont des crénelures d'entrainement 202, configurée pour loger une nervure 124 associée faisant radialement saillie depuis un bord amont 125 de la virole interne 121.

Le turboréacteur 1 peut également comprendre un écrou 22, configuré pour être fixé sur l'arbre d'entrainement 20 de manière à maintenir la virole interne 12 axialement en position par rapport à l'arbre d'entrainement 20. Par exemple, l'écrou 22 peut être placé en butée contre la nervure 124 en saille de l'ensemble de centrage amont 124, 204, et appliquer un effort axial sur ladite nervure 124. De manière optionnelle, une cale de réglage 24 peut alors être placée entre la nervure 124 et les cannelures d'entrainement 202, afin d'ajuster la position axiale de la virole interne 121 en fonction des jeux en sommet d'aubes du tambour d'entrainement 4.

Le disque de soufflante 10 peut en outre comprendre un ergot annulaire 18, s'étendant radialement intérieurement depuis la paroi de jonction 14 en direction de l'arbre d'entrainement 20 afin de prendre appui sur l'écrou, configuré pour éviter le désengagement du disque de soufflante 10 et de l'écrou 22 en cas de perte d'aube de soufflante 3a. Par exemple, l'ergot 18 peut s'étendre depuis la face amont 141 de la paroi de jonction 14, dans une zone adjacente à la virole interne 121. Ici, l'ergot 18 est adjacent à la nervure 124 en saillie de l'ensemble de centrage amont 124, 204. Avantageusement, l'ergot 18 permet en outre de faciliter le démontage du disque de soufflante 10 par rapport à l'arbre d'entrainement 20.

Les cannelures 122, 202, les organes de centrage 123, 203, 124, 204 et l'écrou 22 forment donc ensemble une liaison cannelée capable de résister à des chargements transversaux (rotation autour de l'axe X), radiaux et axiaux respectivement.

La deuxième branche 16 du disque de soufflante 10, ou anneau, est adaptée pour recevoir et maintenir en position une pluralité d'aubes de soufflante 3a, s'étendant radialement depuis une face externe de l'anneau 16.

Généralement, dans l'art antérieur, les aubes de soufflante 3a sont réalisées dans un matériau métallique, qui les rend relativement massives et nécessite souvent la mise en œuvre d'un ou plusieurs systèmes d'équilibrage (connus sous la dénomination de « poireaux ») s'étendant radialement depuis une face interne de l'anneau 16 et configurés pour compenser les efforts centrifuges appliqués par les aubes métalliques sur le disque de soufflante 10. Un exemple de système d'équilibrage est notamment illustré sur la figue 4.

Cependant, afin de réduire la masse globale de la soufflante 3, les aubes de soufflante 3a du turboréacteur 1 sont moins massives que des aubes métalliques conventionnelles. Les aubes de soufflante 3a conformément à la présente invention sont réalisées en matériau composite. Avantageusement, l'alésage de l'anneau 16 peut alors être globalement lisse (c'est-à-dire dépourvu de tels systèmes d'équilibrage). Les systèmes d'équilibrage ne sont en effet plus nécessaires puisque les forces centrifuges résultant de la rotation des aubes 3a sont moins importantes, ce qui permet de réduire fortement l'encombrement du disque de soufflante 10. Ainsi, la mise en œuvre d'aubes de soufflante 3a moins massives telles que des aubes en matériau composite permet de compenser l'encombrement lié à la liaison cannelée.

Le disque de soufflante 10 de section radiale en forme d'épingle comprend en outre une paroi de jonction courbe 14, adaptée pour connecter la virole interne 121 et l'anneau 16. La première branche 12, la paroi de jonction 14 et la deuxième branche 16 sont de préférence formées intégralement d'une seule pièce.

La paroi de jonction 14 est de forme annulaire et est centrée sur l'axe X du turboréacteur 1. Sa section radiale est inclinée vers l'amont entre la première branche 12 et la deuxième branche 16, et forme un angle non nul avec une direction radiale, perpendiculaire à l'axe X. Une telle paroi de jonction 14 rend donc le disque de soufflante 10 souple entre l'anneau 16 et la virole interne 121, ce qui permet d'assurer l'opérabilité du tambour d'entrainement 4.

Dans l'exemple de réalisation illustré sur les figures, la paroi de jonction 14 s'étend entre une zone adjacente au bord amont 125 de la virole interne 121 et une zone adjacente au bord amont 161 de l'anneau 16. Plus précisément, ici, le bord amont 125 de la virole interne 121 est décalé axialement par rapport au bord amont 161 de l'anneau 16 le long de l'axe X du turboréacteur 1, de sorte que la paroi de jonction 14 s'étend de façon inclinée entre le bord amont 125 de la virole interne 121 et le bord amont 161 de l'anneau 16.

La section radiale de la paroi de jonction 14 est en outre évolutive entre la virole interne 121 et l'anneau 16, c'est-à-dire non constante, afin de résister à des charges en centrifuge et en flexion. Par exemple, la section radiale de la paroi de jonction 14 peut être sensiblement droite entre la virole interne 121 et une zone intermédiaire de la partie de jonction 14 qui est adjacente à l'anneau 16, puis devenir courbe dans une zone 143 adjacente à l'anneau 16, la concavité de la courbe 143 étant orientée vers l'aval.

La face interne 162 de l'anneau 16 comprend un évidement 163 délimité par une paroi qui s'étend dans le prolongement de la face aval 142 concave de la paroi de jonction 14, de sorte que, au niveau de la jonction entre la paroi de jonction 14 et l'anneau 16, le disque de soufflante 10 présente une poche de forme globalement arrondie. Cet évidement permet ainsi de réduire la masse du disque de soufflante 10, sans pour autant créer de zones de faiblesses ou réduire la tenue mécanique du disque de soufflante 10. Il peut être obtenu directement de fonderie avec le reste du disque de soufflante 10, ou par usinage dans la face interne de l'anneau 16.

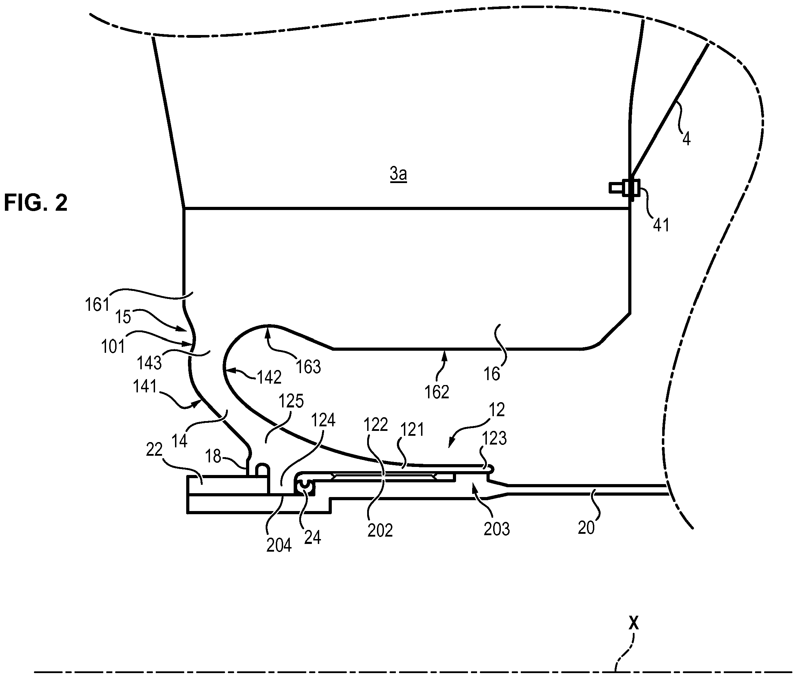

Par ailleurs, la face amont 101 du disque de soufflante 10 peut comprendre un renfoncement 15 au niveau de la jonction entre l'anneau 16 et la paroi de jonction 14. Etant donné que la paroi de jonction 14 est inclinée entre la virole interne 121 et l'anneau 16, la face amont 101 du disque de soufflante 10 présente par conséquent une ligne circonférentielle d'inflexion entre le renfoncement 15 et la paroi de jonction 14, qui se traduit par un changement de concavité. Ainsi, dans l'exemple de réalisation de la figure 2, le renfoncement 15 est courbe et continu, avec une concavité orientée vers l'amont. Il peut être obtenu directement de fonderie avec le reste du disque de soufflante 10, ou par usinage dans la face amont 101 du disque de soufflante 10.

Un tel renfoncement 15 permet d'optimiser les contraintes en cas de perte d'aube de soufflante 3a en assouplissant localement le disque de soufflante 10 et améliore la répartition des contraintes. Par ailleurs, le renfoncement 15 permet de dissocier les contraintes tangentielles dans l'anneau 16 des contraintes en flexion de la paroi de jonction 14 et limiter ainsi tout abattement supplémentaire qui serait lié à des contraintes biaxiales.

Afin de mieux résister aux chargements en centrifuge et en flexion, l'épaisseur du disque de soufflante 10 est de préférence variable entre la virole interne 12 et l'anneau 16. Dans l'exemple de réalisation illustré sur la figure 2, l'épaisseur radiale du disque de soufflante 10 est fine au niveau de la zone d'appui du bord aval 123 de la virole interne 12 sur le bossage annulaire 203. Le disque de soufflante 10 est donc relativement souple dans cette zone 123, ce qui lui permet d'être facilement emmanché sur les cannelures 122 d'entrainement. La souplesse de ce bord aval 123 améliore en outre le centrage du disque de soufflante 10 par rapport à l'arbre d'entrainement 20.

L'épaisseur radiale du disque de soufflante 10 augmente ensuite en direction du bord amont 125 de la virole interne 121, jusqu'à la nervure 124 et l'ergot 18, situé au niveau de la jonction entre la virole interne 121 et la paroi de jonction 14. Les faces amont 141 et aval 142 de la paroi de jonction 14 sont inclinées radialement extérieurement vers l'amont du disque de soufflante 10, et se rejoignent progressivement en direction de l'anneau 16 jusqu'à la partie courbe 143 de la paroi de jonction 14. Enfin, au niveau de cette partie courbe 143, la paroi de jonction 14 s'évase axialement, de manière à former en amont le renfoncement 15, et en aval l'évidement 163. L'anneau 16 quant à lui est de section radiale globalement constante entre son bord amont 161 et l'évidement 163.

Le disque de soufflante 10 est suffisamment rigide, grâce à sa virole interne 121 et la liaison cannelée (cannelures 122, 202, et optionnellement les organes de centrage et l'écrou 22), pour transmettre le couple de l'arbre d'entrainement 20 aux aubes de soufflante 3a et au tambour d'entrainement 4, et résister aux chargements résultant d'une éventuelle perte d'aube de soufflante 3a. Par ailleurs, la mise en œuvre d'une paroi de jonction 14 évolutive et inclinée par rapport à l'axe du turboréacteur 1 permet de conférer au disque 10 une souplesse suffisante pour assurer l'opérabilité du tambour d'entrainement 4. Enfin, l'ajustement de l'épaisseur de la paroi de jonction 14, notamment au niveau du renfoncement 15 ou de l'évidement 163, permet de réduire la masse globale du disque de soufflante 10, et d'optimiser les contraintes dans le disque de soufflante 10.

## Revendications

1. Disque de soufflante (10) pour un turboréacteur (1) dans lequel circule un flux de gaz dans un sens de circulation, ledit disque de soufflante présentant une section radiale en forme d'épingle et comprenant :
- une première branche (12), adaptée pour être fixée à un arbre d'entrainement (20) du turboréacteur (1),
- une deuxième branche (16), s'étendant en regard de la première branche (12) et adaptée pour supporter une pluralité d'aubes de soufflante (3a), et
- une paroi de jonction courbe (14), s'étendant entre la première branche (12) et la deuxième banche (16),
le disque de soufflante (10) portant une pluralité d'aubes de soufflante et étant **caractérisé en ce que** la deuxième branche (16) comprend un évidement (163) s'étendant dans une face interne (162) au niveau de sa jonction avec la paroi de jonction (14) et **en ce que** les aubes de soufflante sont réalisées en matériau composite.

2. Disque de soufflante (10) selon la revendication 1, dans lequel la première branche (12) comprend une virole interne (121) dont une face interne est munie d'une série de cannelures de soufflante (122), lesdites cannelures de soufflante (122) étant adaptées pour coopérer avec des cannelures d'entrainement (202) associées de l'arbre d'entrainement (20).

3. Disque de soufflante (10) selon la revendication 2, dans lequel la virole interne (121) comprend en outre un ensemble de centrage (123, 124) agencé pour coopérer avec un ensemble de centrage (203, 204) associé de l'arbre d'entrainement (20) afin d'améliorer la résistance de la première branche (12) aux charges radiales.

4. Disque de soufflante (10) selon l'une des revendications 1 à 3, dans lequel un bord amont (125) dans le sens de circulation du gaz de la virole interne (121) est décalé axialement par rapport à un bord amont (161) de la deuxième branche (16) et la paroi de jonction (14) s'étend entre le bord amont (125) de la virole interne (121) et le bord amont (161) de la deuxième branche (16).

5. Disque de soufflante (10) selon l'une des revendications 1 à 4, dans lequel la paroi de jonction (14) présente une section radiale évolutive et inclinée vers l'amont entre la première branche (12) et la deuxième branche (16).

6. Disque de soufflante (10) selon l'une des revendications 1 à 5, dans lequel la section radiale de la paroi de jonction (14) est courbe dans une zone (143) adjacente à la deuxième branche (16), la concavité de la courbe étant orientée vers l'aval dans le sens de circulation du gaz.

7. Disque de soufflante (10) selon l'une des revendications 1 à 6, comprenant en outre un renfoncement (15) dans une face amont (101) dans le sens de circulation du gaz, au niveau de la jonction entre la deuxième branche (16) et la paroi de jonction (14), de sorte que la face amont (101) du disque de soufflante (10) présente une ligne circonférentielle d'inflexion entre le renfoncement (15) et la paroi de jonction (14).

8. Disque de soufflante (10) selon l'une des revendications 1 à 7, comprenant en outre un ergot (18) de démontage et de maintien s'étendant radialement intérieurement depuis la paroi de jonction (14), configuré pour coopérer avec un écrou (22) fixé sur l'arbre d'entrainement (20) afin de bloquer axialement le disque de soufflante (10).

9. Turboréacteur (1), comprenant :
- un arbre d'entrainement (20), et
- un disque de soufflante (10) selon l'une des revendications 1 à 8, fixé sur l'arbre d'entrainement (20) par l'intermédiaire de sa première branche (12).

10. Turboréacteur (1) selon la revendication 9, dans lequel la deuxième branche (16) du disque de soufflante (10) comprend un alésage sensiblement lisse.

## Patentansprüche

1. Gebläsescheibe (10) für ein Strahltriebwerk (1), in der ein Gasstrom in einer Zirkulationsrichtung zirkuliert, wobei die Gebläsescheibe einen radialen Querschnitt in Form einer Nadel aufweist und Folgendes umfasst:
- einen ersten Zweig (12), der angepasst ist, um an einer Antriebswelle (20) des Strahltriebwerks (1) befestigt zu werden,
- einen zweiten Zweig (16), der sich gegenüber dem ersten Zweig (12) erstreckt und angepasst ist, um eine Vielzahl von Gebläseschaufeln (3a) zu tragen, und
- eine Krümmungsverbindungswand (14), die sich zwischen dem ersten Zweig (12) und dem zweiten Zweig (16) erstreckt,
wobei die Gebläsescheibe (10) eine Vielzahl von Gebläseschaufeln trägt und **dadurch gekennzeichnet ist, dass** der zweite Zweig (16) eine Aussparung (163) umfasst, die sich auf einer Innenseite (162) im Bereich ihrer Verbindung mit der Verbindungswand (14) erstreckt, und dadurch, dass die Gebläseschaufeln aus einem Verbundwerkstoff gefertigt sind.

2. Gebläsescheibe (10) nach Anspruch 1, wobei der erste Zweig (12) einen Innenring (121) umfasst, von dem eine Innenseite mit einer Reihe von Gebläserillen (122) versehen ist, wobei die Gebläserillen (122) angepasst sind, um mit Antriebsrillen (202) zusammenzuwirken, die der Antriebswelle (20) zugeordnet sind.

3. Gebläsescheibe (10) nach Anspruch 2, wobei der Innenring (121) weiter eine Zentriereinheit (123, 124) umfasst, die angeordnet ist, um mit einer Zentriereinheit (203, 204) zusammenzuwirken, die der Antriebswelle (20) zugeordnet ist, um die Beständigkeit des ersten Zweiges (12) gegenüber radialen Belastungen zu verbessern.

4. Gebläsescheibe (10) nach einem der Ansprüche 1 bis 3, wobei ein stromaufwärtiger Rand (125) in der Zirkulationsrichtung des Gases des Innenringes (121) axial in Bezug auf einen stromaufwärtigen Rand (161) des zweiten Zweiges (16) versetzt ist, und sich die Verbindungswand (14) zwischen dem stromaufwärtigen Rand (125) des Innenringes (121) und dem stromaufwärtigen Rand (161) des zweiten Zweiges (16) erstreckt.

5. Gebläsescheibe (10) nach einem der Ansprüche 1 bis 4, wobei die Verbindungswand (14) einen entwicklungsfähigen und stromaufwärts geneigten radialen Querschnitt zwischen dem ersten Zweig (12) und dem zweiten Zweig (16) aufweist.

6. Gebläsescheibe (10) nach einem der Ansprüche 1 bis 5, wobei der radiale Querschnitt der Verbindungswand (14) in einer Zone (143) angrenzend an den zweiten Zweig (16) gekrümmt ist, wobei die Konkavität der Krümmung stromabwärts in der Zirkulationsrichtung des Gases gerichtet ist.

7. Gebläsescheibe (10) nach einem der Ansprüche 1 bis 6, weiter eine Mulde (15) in einer stromaufwärtigen Seite (101) in der Zirkulationsrichtung des Gases im Bereich der Verbindung zwischen dem zweiten Zweig (16) und der Verbindungswand (14) umfassend, sodass die stromaufwärtige Seite (101) der Gebläsescheibe (10) eine umfängliche Biegungslinie zwischen der Mulde (15) und der Verbindungswand (14) aufweist.

8. Gebläsescheibe (10) nach einem der Ansprüche 1 bis 7, weiter einen Demontage- und Festhaltezapfen (18) umfassend, der sich radial innen aus der Verbindungswand (14) erstreckt, konfiguriert, um mit einer Mutter (22) zusammenzuwirken, die an der Antriebswelle (20) befestigt ist, um die Gebläsescheibe (10) axial zu blockieren.

9. Strahltriebwerk (1), umfassend:
- eine Antriebswelle (20), und
- eine Gebläsescheibe (10) nach einem der Ansprüche 1 bis 8, die anhand ihres ersten Zweiges (12) auf der Antriebswelle (20) befestigt ist.

10. Strahltriebwerk (1) nach Anspruch 9, wobei der zweite Zweig (16) der Gebläsescheibe (10) eine im Wesentlichen glatte Bohrung umfasst.

## Claims

1. A fan disk (10) for a turbojet engine (1) wherein a gas flow circulates in a circulation direction, said fan disk having a radial section in the shape of a pin comprising:
- a first branch (12), designed to be fixed to a drive shaft (20) of the turbojet engine (1),
- a second branch (16), extending facing the first branch (12) and designed to support a plurality of fan blades (3a), and
- a curved junction wall (14) extending between the first branch (12) and the second branch (16),
the fan disk (10) carrying a plurality of fan blades and being **characterised in that** the second branch (16) comprises a recess (163) extending in one inner face (162) at its junction with the junction wall (14) and **in that** the fan blades are made of a composite material.

2. The fan disk (10) according to claim 1, wherein the first branch (12) comprises an inner shroud (121) one inner face whereof is provided with a series of fan splines (122), said fan splines (122) being designed to cooperate with associated drive splines (202) of the drive shaft (20).

3. The fan disk (10) according to claim 2, wherein the inner shroud (121) further comprises a centring assembly (123, 124) arranged to cooperate with an associated centring assembly (203, 204) of the drive shaft (20) so as to improve the resistance of the first branch (12) to radial loads.

4. The fan disk (10) according to one of claims 1 to 3, wherein an upstream edge (125) in the gas circulation direction of the inner shroud (121) is axially offset with respect to an upstream edge (161) of the second branch (16) and the junction wall (14) extends between the upstream edge (125) of the inner shroud (121) and the upstream edge (161) of the second branch (16).

5. The fan disk (10) according to one of claims 1 to 4, wherein the junction wall (14) has a varying radial section inclined towards the upstream direction between the first branch (12) and the second branch (16).

6. The fan disk (10) according to one of claims 1 to 5, wherein the radial section of the junction wall (14) is curved in an area (143) adjacent to the second branch (16), the concavity of the curve being oriented downstream in the gas circulation direction.

7. The fan disk (10) according to one of claims 1 to 6, further comprising an indentation (15) in an upstream face (101) in the gas circulation direction, at the junction between the second branch (16) and the junction wall (14), so that the upstream face (101) of the fan disk (10) has a circumferential inflection line between the indentation (15) and the junction wall (14).

8. The fan disk (10) according to one of claims 1 to 7, further comprising a disassembly and holding lug (18) extending radially inwardly from the junction wall (14), configured to cooperate with a nut (22) fixed to the drive shaft (20) so as to axially block the fan disk (10).

9. A turbojet engine (1) comprising:
- a drive shaft (20), and
- a fan disk (10) according to one of claims 1 to 8, fixed to the drive shaft (20) by means of its first branch (12).

10. A turbojet engine (1) according to claim 9, wherein the second branch (16) of the fan disk (10) comprises a substantially smooth bore.
